# EUROPEAN PATENT APPLICATION

(11) **EP 4 672 360 A1**
(43) Date of publication of application: **31.12.2025**
(21) Application number: 25176648.1
(22) Date of filing: 15.05.2025
(51) Int. Cl.: H01M 4/136, H01M 4/36, H01M 4/58, H01M 10/054, H01M 4/02

(54) **POSITIVE ELECTRODE MATERIAL AND PREPARATION METHOD THEREFOR, POSITIVE ELECTRODE, AND BATTERY**

(30) Priority: 24.06.2024 CN 202410826044
(71) Applicant: Xiamen Hithium Energy Storage Technology Co., Ltd., Xiamen, Fujian 361100 (CN)
(72) Inventor: WANG, Yugang, Xiamen, 361100 (CN); SHEN, Liuxue, Xiamen, 361100 (CN); CHEN, Pengwei, Xiamen, 361100 (CN); WANG, Wei, Xiamen, 361100 (CN); WANG, Shiwen, Xiamen, 361100 (CN)
(74) Representative: Viering, Jentschura & Partner mbB Patent- und Rechtsanwälte

(57) **Abstract**

The present disclosure relates to a positive electrode material and a preparation method therefor, a positive electrode, and a battery. The positive electrode material includes an iron-based phosphate material. The iron-based phosphate material includes a first active material and a second active material. A chemical formula of the first active material is Na₄Fe₃(PO₄)₂P₂O₇. A chemical formula of the second active material is Na₂FeP₂O₇. In the iron-based phosphate material, a molar ratio of an iron element to a phosphorus element is *A,* and *A* satisfies: 0.55 ≤ *A* ≤ 0.75.

## Description

### TECHNICAL FIELD

This disclosure relates to the field of battery technology, and in particular, to a positive electrode material and a preparation method therefor, a positive electrode, and a battery.

### BACKGROUND

With the continuous development of energy storage technology, sodium-ion batteries have attracted much attention due to their high stability and safety. As an iron-based phosphate polyanionic material, Na₄Fe₃(PO₄)₂P₂O₇ (NFPP) has three-dimensional sodium-ion diffusion channel and relatively high theoretical capacity per gram, but the powder compacted density of NFPP is relatively low, and when NFPP is applied to a positive electrode, the compacted density of the positive electrode is also relatively low, which limits the improvement of the energy density of a battery.

### SUMMARY

In view of this, the present disclosure provides a positive electrode material and a preparation method therefor, a positive electrode, and a battery.

The present disclosure provides a positive electrode material. The positive electrode material includes an iron-based phosphate material. The iron-based phosphate material includes a first active material and a second active material. A chemical formula of the first active material is Na₄Fe₃(PO₄)₂P₂O₇. A chemical formula of the second active material is Na₂FeP₂O₇. In the iron-based phosphate material, a molar ratio of an iron element to a phosphorus element is *A,* and *A* satisfies: 0.55 ≤ *A* ≤ 0.75.

Further, in the iron-based phosphate material, a mass fraction of the first active material is *B,* a mass fraction of the second active material is *C, B* satisfies: 85% ≤ *B <* 100%, and *C* satisfies: 0 < *C* ≤ 15%.

Further, a compacted density of the positive electrode material is *ρ1,* and *ρ1* satisfies: *ρ1* = -37.04*B*² - 67.41*C* + 39.04.

Further, the compacted density *ρ1* of the positive electrode material satisfies: 2.0 g/cm³ < *ρ1* ≤ 2.3 g/cm³.

Further, the positive electrode material includes multiple positive electrode particles. Each of the multiple positive electrode particles includes a coating layer and a core. The core is made of the iron-based phosphate material. The coating layer is coated around a surface of the core. A median particle size *D50* of the positive electrode material satisfies: 2 µm ≤ *D50* ≤ 5 µm. A particle size *D99* of the positive electrode material corresponding to a particle size when a cumulative volume fraction in a volume-based distribution reaches 99% satisfies: 10 µm ≤ *D99* ≤ 30 µm.

Further, a mass fraction *a* of the coating layer in each of the multiple positive electrode particles satisfies: 1% ≤ *a* ≤ 5%.

The present disclosure further provides a preparation method for the positive electrode material provided in the present disclosure. The preparation method includes the following. A sodium source, an iron source, a phosphorus source, and a carbon source are provided. The sodium source, the iron source, the phosphorus source, and the carbon source are mixed to obtain a slurry. The slurry is sand milled and spray dried to obtain intermediate particles. The intermediate particles are sintered to obtain the positive electrode material. The positive electrode material includes a coating layer and a core. The core is made of the iron-based phosphate material. The coating layer is coated around a surface of the core. The carbon source is carbonized to form the coating layer. The sodium source, the iron source, and the phosphorus source form the core made of the iron-based phosphate material. The iron-based phosphate material includes the first active material and the second active material. The chemical formula of the first active material is Na₄Fe₃(PO₄)₂P₂O₇. The chemical formula of the second active material is Na₂FeP₂O₇. In the iron-based phosphate material, the molar ratio of the iron element to the phosphorus element is *A*, and *A* satisfies: 0.55 ≤ *A* ≤ 0.75.

Further, sintering the intermediate particles to obtain the positive electrode material includes the following. The intermediate particles are sintered at a temperature *T*, to make the carbon source carbonized to form the coating layer, and make the sodium source, the iron source, and the phosphorus source form the iron-based phosphate material. *T* satisfies: 470 °C ≤ *T* ≤ 580 °C.

Further, a period during which the intermediate particles are sintered is *t,* and *t* satisfies: 10 h ≤*t* ≤ 16 h*.*

Further, providing the sodium source, the iron source, the phosphorus source, and the carbon source, and mixing the sodium source, the iron source, the phosphorus source, and the carbon source to obtain the slurry, includes the following. A molar ratio *α* of a sodium element in the sodium source to an iron element in the iron source satisfies: 1.33 ≤ α ≤ 1.82. A molar ratio *β* of the iron element in the iron source to a phosphorus element in the phosphorus source satisfies: 0.55 ≤ β ≤ 0.75.

Further, sand milling and spray drying the slurry to obtain the intermediate particles, includes the following. The slurry is sand milled to obtain a refined slurry. The refined slurry includes precursor particles. A particle size *D* of each of the precursor particles satisfies: *D* < 900 nm. The refined slurry is spray dried to obtain the intermediate particles.

The present disclosure further provides a positive electrode. The positive electrode includes a positive current collector and a positive electrode material layer. The positive electrode material layer is disposed on a surface of the positive current collector. The positive electrode material layer includes the positive electrode material provided in the present disclosure, or the positive electrode material obtained by the preparation method for the positive electrode material provided in the present disclosure. An ultimate compacted density *p2* of the positive electrode satisfies: 2.1 g/cm³ *< ρ2* ≤ 2.5 g/cm³.

Further, in the iron-based phosphate material, a mass fraction of the first active material is *B,* a mass fraction of the second active material is *C*, *C =* 1 - *B*, and the ultimate compacted density *ρ2* of the positive electrode satisfies: *ρ2* = -49.38*B*² - 89.87*C* + 51.48.

The present disclosure further provides a battery. The battery includes an electrolyte, a negative electrode, a separator, and the positive electrode provided in the present disclosure. The negative electrode is at least partially immersed in the electrolyte. The separator is positioned at one side of the negative electrode and at least partially immersed in the electrolyte. The positive electrode is disposed at one side of the separator positioned facing away from the negative electrode and at least partially immersed in the electrolyte.

In the present disclosure, the iron-based phosphate material of the positive electrode material includes the first active material and the second active material. The first active material has a relatively high theoretical capacity per gram. When the positive electrode material is applied to the positive electrode and assembled into the battery, the battery has a good discharge performance. In addition, the second active material has a relatively high theoretical density. When the first active material is mixed with the second active material, compared with the solution in which only the first active material is provided in the positive electrode material, the second active material in the solution provided by the present disclosure can effectively improve the compacted density of the positive electrode material. When the positive electrode material is applied to the positive electrode, the compacted density of the positive electrode can be further improved, thereby increasing the energy density of the battery when the positive electrode is assembled into the battery. In the present disclosure, when the molar ratio *A* of the iron element in the iron-based phosphate material to the phosphorus element in the iron-based phosphate material satisfies: 0.55 ≤ *A* < 0.75, the contents of the iron element and the phosphorus element in the iron-based phosphate material are within a reasonable range, so that in the iron-based phosphate material, the content of the first active material and the content of the second active material are both within a reasonable range. On the one hand, the first active material can maintain the capacity per gram of the positive electrode material in the full operating voltage range of the battery, so that when the positive electrode material is applied to the positive electrode and assembled into the battery, the battery has good discharge performance. On the other hand, the second active material can effectively increase the compacted density of the positive electrode material, so that when the positive electrode material is applied to the positive electrode and assembled into the battery, the battery has a relatively high compacted density. When the molar ratio *A* of the iron element in the iron-based phosphate material to the phosphorus element in the iron-based phosphate material is too large, the content of the iron element in the iron-based phosphate material is too high and the content of the phosphorus element in the iron-based phosphate material is too low. As a result, impurity phase NaFePO₄ (NFP) will be generated in the preparation process of the positive electrode material, and the theoretical capacity per gram of NFP is much lower than the theoretical capacity per gram of the first active material and the theoretical capacity per gram of the second active material, so that the capacity per gram of the positive electrode material in the full operating voltage range of the battery is reduced, and when the positive electrode material is applied to the positive electrode and assembled into the battery, the cycle performance of the battery is relatively poor. When the molar ratio A of the iron element in the iron-based phosphate material to the phosphorus element in the iron-based phosphate material is too small, the content of the iron element in the iron-based phosphate material is too low and the content of the phosphorus element in the iron-based phosphate material is too high, so that the content of the first active material is low in the iron-based phosphate material, and correspondingly, the content of the second active material is high in the iron-based phosphate material. As a result, although the compacted density of the positive electrode material can be increased by mixing the second active material into the first active material, the capacity per gram of the positive electrode material in the full operating voltage range of the battery is reduced due to the excessively high content of the second active material, so that when the positive electrode material is applied to the positive electrode and assembled into the battery, the battery has relatively poor discharge performance.

### BRIEF DESCRIPTION OF THE DRAWINGS

In order to explain technical solutions in embodiments of the present disclosure more clearly, the following will give a brief introduction to the accompanying drawings required for describing the implementations. Apparently, the accompanying drawings in the following description illustrate some implementations of the present disclosure. For those of ordinary skill in the art, other accompanying drawings can be obtained according to these accompanying drawings without creative efforts.
FIG. 1 is a schematic structural diagram of a battery in an embodiment of the present disclosure.
FIG. 2 is a schematic structural diagram of a positive electrode in an embodiment of the present disclosure.
FIG. 3 is a schematic flow diagram of a preparation method for a positive electrode material in an embodiment of the present disclosure.
FIG. 4 is a schematic flow diagram of a preparation method for a positive electrode material in another embodiment of the present disclosure.
FIG. 5 is an X-ray diffraction (XRD) spectrum in an embodiment of the present disclosure.

Description of reference signs of the accompanying drawings: 100 - positive electrode material, 110 - positive electrode particle, 120 - core, 130 - coating layer, 200 - positive electrode, 210 - positive current collector, 220 - positive electrode material layer, 300 - battery, 310 - electrolyte, 320 - negative electrode, 330 - separator.

### DETAILED DESCRIPTION

The following will clearly and completely describe technical solutions of embodiments of the present disclosure with reference to the accompanying drawings in embodiments of the present disclosure. Apparently, embodiments described herein are merely some embodiments, rather than all embodiments, of the present disclosure. Based on the embodiments of the present disclosure, all other embodiments obtained by those of ordinary skill in the art without creative effort shall fall within the protection scope of the present disclosure.

The terms such as "first", "second", etc., in the specification, the claims, and the above accompanying drawings of the present disclosure are used to distinguish different objects, rather than describing a particular order. In addition, the terms "including", "comprising", and "having" as well as variations thereof are intended to cover non-exclusive inclusion. For example, a process, method, system, product, or device including a series of steps or units is not limited to the listed steps or units, on the contrary, it may alternatively include other steps or units that are not listed; alternatively, other steps or units inherent to the process, method, product, or device may be included either.

The term "embodiment" or "implementation" referred to herein means that particular features, structures, or properties described in conjunction with embodiments or implementations may be defined in at least one embodiment of the present disclosure. The phrase "embodiment" or "implementation" appearing in various places in the specification does not necessarily refer to the same embodiment or an independent or alternative embodiment that is mutually exclusive with other embodiments. Those skilled in the art will understand expressly and implicitly that an embodiment described in the present disclosure may be combined with other embodiments.

With the continuous development of energy storage technology, sodium-ion batteries have attracted much attention due to their high stability and safety. As an iron-based phosphate polyanionic material, Na₄Fe₃(PO₄)₂P₂O₇ (NFPP) has three-dimensional sodium-ion diffusion channel and relatively high theoretical capacity per gram, but the powder compacted density of NFPP is relatively low, and when NFPP is applied to a positive electrode, the compacted density of the positive electrode is also relatively low, which limits the improvement of the energy density of a battery.

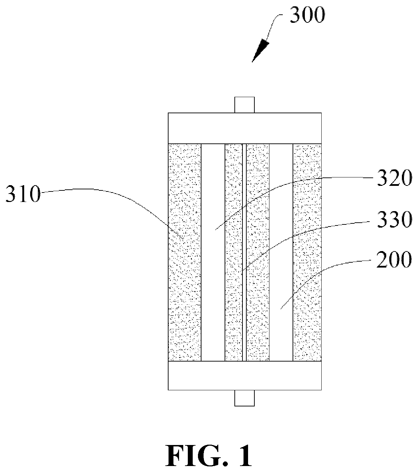

Referring to FIG. 1, the present disclosure further provides a battery 300. The battery 300 includes an electrolyte 310, a negative electrode 320, a separator 330, and a positive electrode 200 provided in the present disclosure. The negative electrode 320 is at least partially immersed in the electrolyte 310. The separator 330 is positioned at one side of the negative electrode 320 and is at least partially immersed in the electrolyte 310. The positive electrode 200 is disposed at one side of the separator 330 positioned facing away from the negative electrode 320 and is at least partially immersed in the electrolyte 310.

It can be understood that the positive electrode 200, the separator 330, and the negative electrode 320 are laminated in sequence.

In this embodiment, the battery 300 includes the positive electrode 200 provided in the present disclosure. A positive electrode material layer 220 of the positive electrode 200 includes a positive electrode material 100 provided in the present disclosure. The positive electrode material 100 includes a first active material and a second active material. The first active material has a relatively high theoretical capacity per gram, and the first active material has a relatively large mass fraction, so that when the positive electrode material 100 is applied to the positive electrode 200 and assembled into the battery 300, the battery 300 has good discharge performance. Further, when the second active material is mixed with the first active material, the compacted density of the positive electrode material 100 is increased, and the second active material makes up for the defect that the compacted density of the first active material is relatively small, so that when the positive electrode material 100 is applied to the positive electrode 200 and assembled into the battery 300, the positive electrode 200 has both a relatively high discharge capacity per gram and a relatively high compacted density.

Optionally, the battery 300 may be one of a cylindrical battery, a prismatic battery, a pouch battery, and the like. When the battery 300 is a cylindrical battery, there is no need to perform lamination on the negative electrode 320, the separator 330, and the positive electrode 200.

Optionally, the battery 300 may be a sodium-ion battery.

It can be understood that when the iron-based phosphate material consists of the first active material, the compacted density of the positive electrode 200 is 2.1 g/cm³.

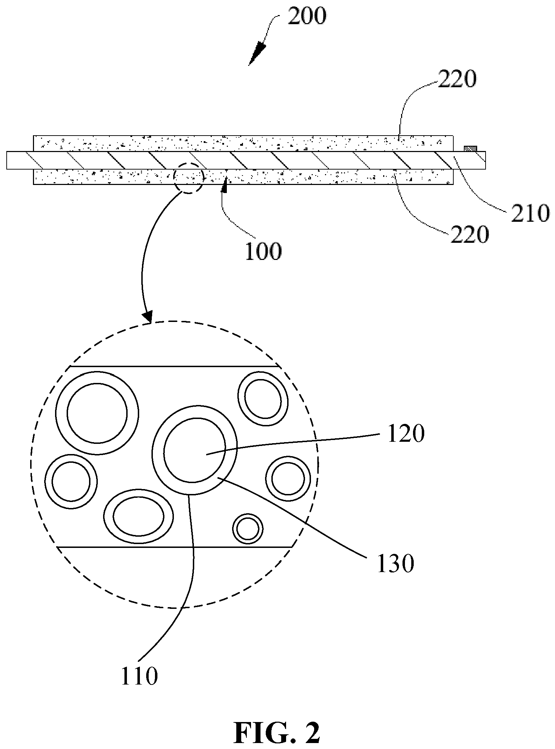

Referring to FIG. 2, the present disclosure further provides a positive electrode 200. The positive electrode 200 includes a positive current collector 210 and a positive electrode material layer 220. The positive electrode material layer 220 is disposed on a surface of the positive current collector 210. The positive electrode material layer 220 includes the positive electrode material 100 provided in the present disclosure or the positive electrode material 100 obtained by the preparation method for the positive electrode material 100 provided in the present disclosure. The ultimate compacted density *p2* of the positive electrode 200 satisfies: 2.1 g/cm³ *< ρ2* ≤ 2.5 g/cm³.

Specifically, the ultimate compacted density *p2* of the positive electrode 200 may be, but is not limited to, 2.1g/cm³, 2.12g/cm³, 2.15g/cm³, 2.18g/cm³, 2.2g/cm³, 2.22g/cm³, 2.25g/cm³, 2.28g/cm³, 2.3g/cm³, 2.32g/cm³, 2.35g/cm³, 2.38g/cm³, 2.4g/cm³, 2.42g/cm³, 2.45g/cm³, 2.47g/cm³, 2.48g/cm³, 2.5g/cm³, etc.

Optionally, in some embodiments, the positive electrode material layer 220 is disposed on one surface of the positive current collector 210. In other embodiments, the positive electrode material layer 220 is disposed on two surfaces of the positive current collector 210 positioned facing away from each other.

It can be understood that the ultimate compacted density of the positive electrode 200 may be the density limit reached after the ultimate compaction process.

Optionally, the positive current collector 210 is selected from a foil material.

In this embodiment, the positive electrode material layer 220 includes the positive electrode material 100 provided in the present disclosure, or the positive electrode material 100 prepared by the preparation method for the positive electrode material 100 provided in the present disclosure. The positive electrode material 100 includes the first active material and the second active material. The first active material has a relatively high theoretical capacity per gram, and the first active material has a relatively large mass fraction, so that when the positive electrode material 100 is applied to the positive electrode 200 and assembled into the battery 300, the battery 300 has good discharge performance. Further, when the second active material is mixed with the first active material, the compacted density of the positive electrode material 100 is increased, and the second active material makes up for the defect that the compacted density of the first active material is relatively small, so that when the positive electrode material 100 is applied to the positive electrode 200 and assembled into the battery 300, the positive electrode 200 has a relatively high compacted density, and the battery 300 has a relatively high energy density. According to the data of the present disclosure, when other parameters are equal, the compacted density of the positive electrode 200 in the embodiments of the present disclosure is higher than the compacted density of the positive electrode 200 assembled from the iron-based phosphate material consisting of the first active material, and the compacted density *p2* of the positive electrode 200 in the embodiments of the present disclosure satisfies: of 2.1 g/cm³ *<p2* ≤ 2.5 g/cm³. When the compacted density *p2* of the positive electrode 200 satisfies: of 2.1 g/cm³ *< ρ2* ≤ 2.5 g/cm³, the compacted density *p2* of the positive electrode 200 is within a reasonable range, so that the positive electrode 200 can maintain a relatively high discharge capacity per gram and has a relatively high compacted density. When the positive electrode 200 is assembled into the battery 300, the battery 300 has both a relatively high energy density and a good discharge performance. However, when the compacted density of the positive electrode 200 is too large, that is, the mass content of the second active material is too large in the iron-based phosphate material, and correspondingly, the mass content of the first active material is too small in the iron-based phosphate material, so that the discharge capacity per gram of the positive electrode 200 is relatively low, and the discharge performance of the battery 300 is reduced.

Optionally, the positive electrode material layer 220 further includes a conductive agent and a binder. The conductive agent is configured to improve the conductivity of the positive electrode material layer 220. The binder is configured to bond the positive electrode material 100.

Optionally, the conductive agent includes at least one or more members selected from the group consisting of acetylene black, conductive carbon black, carbon nanotubes, carbon fibers, graphene, and the like.

Optionally, the binder is selected from polyvinylidene fluoride (PVDF).

In some embodiments, in the iron-based phosphate material, a mass fraction of the first active material is *B,* a mass fraction of the second active material is *C*, *C =* 1 - *B*, and an ultimate compacted density *p2* of the positive electrode satisfies: *ρ2* = -49.38*B*² - 89.87C + 51.48.

It can be understood that if C = 1 *- B* , the iron-based phosphate material consists of the first active material and the second active material.

In this embodiment, the ultimate compacted density *ρ*2 of the positive electrode 200 satisfies: *ρ2* = -49.38*B*² - 89.87*C* + 51.48. The compacted density of the positive electrode 200 is related to both the mass fraction *B* of the first active material and the mass fraction *C* of the second active material. By establishing the relationship between the compacted density of the positive electrode 200 and the mass fraction *B* of the first active material and the mass fraction *C* of the second active material, the compacted density of the positive electrode 200 can be controlled by respectively adjusting the mass fraction of the first active material and the mass fraction of the second active material. When the positive electrode 200 is assembled into the battery 300, the battery 300 can have a relatively high energy density.

The present disclosure provides a positive electrode material 100. The positive electrode material 100 includes an iron-based phosphate material. The iron-based phosphate material includes a first active material and a second active material. A chemical formula of the first active material is Na₄Fe₃(PO₄)₂P₂O₇. A chemical formula of the second active material is Na₂FeP₂O₇ (NFPO). In the iron-based phosphate material, a molar ratio of an iron element to a phosphorus element is *A,* and *A* satisfies: 0.55 ≤ *A* ≤ 0.75.

Specifically, in the iron-based phosphate material, the molar ratio A of the iron element to the phosphorus element may be, but is not limited to, 0.55, 0.56, 0.57, 0.58, 0.59, 0.6, 0.61, 0.63, 0.65, 0.66, 0.67, 0.68, 0.69, 0.7, 0.71, 0.72, 0.73, 0.74, 0.75, etc.

It can be understood that the theoretical density of the second active material is larger than the theoretical density of the first active material. In the terminology of the present disclosure, the theoretical density of the second active material refers to a ratio of a relative molecular mass of the second active material to a unit cell volume of the second active material, and the theoretical density of the first active material refers to a ratio of a relative molecular mass of the first active material to a unit cell volume of the first active material.

It can be understood that the theoretical capacity per gram of the first active material is larger than the theoretical capacity per gram of the second active material. In the terminology of the present disclosure, the theoretical capacity per gram of the first active material is an amount of electricity supplied per unit mass of the first active material in the full operating voltage range of the battery 300 when the first active material is applied to the positive electrode 200 and assembled into the battery 300, and the theoretical capacity per gram of the second active material is an amount of electricity supplied per unit mass of the second active material in the full operating voltage range of the battery 300 when the second active material is applied to the positive electrode 200 and assembled into the battery 300.

It can be understood that the molar ratio of the iron element in the iron-based phosphate material to the phosphorus element in the iron-based phosphate material may be, a ratio of the sum of the amount of substance of the iron element in the first active material and the amount of substance of the iron element in the second active material to the sum of the amount of substance of the phosphorus element in the first active material and the amount of substance of the iron element in the second active material.

In this embodiment, the iron-based phosphate material of the positive electrode material 100 includes the first active material and the second active material. The first active material has a relatively high theoretical capacity per gram. When the positive electrode material 100 is applied to the positive electrode 200 and assembled into the battery 300, the battery 300 has a good discharge performance. In addition, the second active material has a relatively high theoretical density. When the first active material is mixed with the second active material, compared with the solution in which only the first active material is provided in the positive electrode material 100, the second active material in the solution provided by the present disclosure can effectively improve the compacted density of the positive electrode material 100. When the positive electrode material 100 is applied to the positive electrode 200, the compacted density of the positive electrode 200 can be further improved, thereby increasing the energy density of the battery 300 when the positive electrode 200 is assembled into the battery 300. In this embodiment, when the molar ratio A of the iron element in the iron-based phosphate material to the phosphorus element in the iron-based phosphate material satisfies: 0.55 ≤ *A* < 0.75, the contents of the iron element and the phosphorus element in the iron-based phosphate material are within a reasonable range, so that in the iron-based phosphate material, the content of the first active material and the content of the second active material are both within a reasonable range. On the one hand, the first active material can maintain the capacity per gram of the positive electrode material 100 in the full operating voltage range of the battery 300, so that when the positive electrode material 100 is applied to the positive electrode 200 and assembled into the battery 300, the battery 300 has good discharge performance. On the other hand, the second active material can effectively increase the compacted density of the positive electrode material 100, so that when the positive electrode material 100 is applied to the positive electrode 200 and assembled into the battery 300, the battery 300 has a relatively high compacted density. When the molar ratio A of the iron element in the iron-based phosphate material to the phosphorus element in the iron-based phosphate material is too large, the content of the iron element in the iron-based phosphate material is too high and the content of the phosphorus element in the iron-based phosphate material is too low. As a result, impurity phase NaFePO₄ (NFP) will be generated in the preparation process of the positive electrode material, and the theoretical capacity per gram of NFP is much lower than the theoretical capacity per gram of the first active material and the theoretical capacity per gram of the second active material, so that the capacity per gram of the positive electrode material 100 in the full operating voltage range of the battery 300 is reduced, and when the positive electrode material 100 is applied to the positive electrode 200 and assembled into the battery 300, the cycle performance of the battery 300 is relatively poor. When the molar ratio A of the iron element in the iron-based phosphate material to the phosphorus element in the iron-based phosphate material is too small, the content of the iron element in the iron-based phosphate material is too low and the content of the phosphorus element in the iron-based phosphate material is too high, so that the content of the first active material is low in the iron-based phosphate material, and correspondingly, the content of the second active material is high in the iron-based phosphate material. As a result, although the compacted density of the positive electrode material 100 can be increased by mixing the second active material into the first active material, the capacity per gram of the positive electrode material 100 in the full operating voltage range of the battery is reduced due to the excessively high content of the second active material, so that when the positive electrode material 100 is applied to the positive electrode 200 and assembled into the battery 300, the battery 300 has relatively poor discharge performance.

In the terminology of the present disclosure, the full operating voltage range of the battery 300 is a range between a minimum operating voltage and a maximum operating voltage during the charge and discharge of the battery 300. For example, if the maximum operating voltage of the battery 300 is 4.2 V and the minimum operating voltage of the battery 300 is 1.5 V, the full operating voltage range of the battery 300 is from 1.5 V to 4.2 V.

It can be understood that the theoretical density of the first active material is 3.28 g/cm³ and the theoretical density of the second active material is 3.56 g/cm³.

In some embodiments, a mass fraction of the first active material in the iron-based phosphate material is *B,* and *B* satisfies: 85% ≤ *B <* 100%.

Specifically, the mass fraction *B* of the first active material may be, but is not limited to, 85%, 86%, 87%, 88%, 89%, 90%, 91%, 92%, 93%, 94%, 95%, 96%, 97%, 98%, 99%, etc.

In the iron-based phosphate material provided in this embodiment, when the mass fraction *B* of the first active material satisfies: 85% ≤ *B <* 100%, the mass fraction of the first active material is within a reasonable range. On the one hand, the addition of the second active material causes the positive electrode material 100 to have a relatively high compacted density, and at the same time, the compacted density of the positive electrode 200 when the positive electrode material 100 is applied to the positive electrode 200 and the energy density of the battery 300 when the positive electrode 200 is applied to the battery 300 are improved. On the other hand, when the mass fraction of the first active material is still relatively high, the reduction of the discharge capacity per gram of the positive electrode material 100 in the full operating voltage range of the battery 300 due to the addition of the second active material can be alleviated, so that the battery 300 has both relatively high energy density and good discharge performance. When the mass fraction *B* of the first active material is too small, the capacity per gram of the positive electrode material 100 in this embodiment in the full operating voltage range of the battery 300 will be greatly reduced as compared with the solution in which the positive electrode material 100 only includes the first active material, so that the discharge performance of the battery 300 is reduced.

In some embodiments, a mass fraction of the second active material in the iron-based phosphate material is *C*, and *C* satisfies: 0 < *C* ≤ 15%.

Specifically, the mass fraction C of the second active material may be, but is not limited to, 1%, 2%, 3%, 5%, 6%, 7%, 8%, 9%, 10%, 11%, 12%, 13%, 14%, 15%, etc.

In this embodiment, when the mass fraction C of the second active material satisfies: 0 < *C* ≤ 15%, the mass fraction C of the second active material is within a reasonable range. On the one hand, the second active material can effectively increase the compacted density of the positive electrode material 100, so as to increase the energy density of the battery 300 when the positive electrode material 100 is applied to the positive electrode 200 and assembled into the battery 300. On the other hand, the reduction of the discharge capacity per gram of the positive electrode material 100 due to an excessively large mass fraction of the second active material can be avoided, so that when the positive electrode material 100 is applied to the battery 300, the battery 300 has both relatively high energy density and good discharge performance. When the mass fraction *C* of the second active material is too large, correspondingly, the mass fraction of the first active material in the iron-based phosphate material is too small, and the capacity per gram of the positive electrode material 100 in this embodiment in the full operating voltage range of the battery 300 is greatly reduced compared with the solution in which the positive electrode material 100 only includes the first active material, so that the discharge performance of the battery 300 is reduced.

Optionally, in some embodiments, the mass fraction *B* of the first active material and the mass fraction *C* of the second active material satisfy: *B + C* = 1. In other words, the iron-based phosphate material consists of the first active material and the second active material.

In this embodiment, when the iron-based phosphate material consists of the first active material and the second active material, it is possible to avoid an impurity phase such as NFP from reducing the compacted density of the positive electrode material 100 or the capacity per gram of the positive electrode material 100 in the full voltage operating range. In addition, the iron-based phosphate material has a relatively high purity, so that the battery 300 has a relatively long service life when the positive electrode material 100 is applied to the battery 300.

In some embodiments, a compacted density of the positive electrode material 100 is *ρ1,* and *ρ1* satisfies: *ρ1* = -37.04*B*² - 67.41*C* + 39.04.

In this embodiment, the compacted density *ρ1* of the positive electrode material 100 satisfies: *ρ1* = -37.04*B*² - 67.41C + 39.04. The compacted density of the positive electrode material 100 is related to both the mass fraction *B* of the first active material and the mass fraction *C* of the second active material. By establishing the relationship between the compacted density of the positive electrode material 100 and the mass fraction *B* of the first active material and the mass fraction *C* of the second active material, the compacted density of the positive electrode material 100 can be controlled by respectively adjusting the mass fraction of the first active material and the mass fraction of the second active material. When the positive electrode material 100 is applied to the positive electrode 200 and assembled into the battery 300, the battery 300 can have a relatively high energy density.

It can be understood that when the iron-based phosphate material includes only the first active material, the compacted density of the positive electrode material 100 is 2.0 g/cm³.

In some embodiments, the compacted density *ρ1* of the positive electrode material 100 satisfies: 2.0 g/cm³ *< ρ1* ≤ 2.3 g/cm³.

Specifically, the compacted density *ρ1* of the positive electrode material 100 may be, but is not limited to, 2.0 g/cm³, 2.01 g/cm³, 2.03 g/cm³, 2.05 g/cm³, 2.07 g/cm³, 2.09 g/cm³, 2.1 g/cm³, 2.12 g/cm³, 2.14 g/cm³, 2.16 g/cm³, 2.18 g/cm³, 2.2 g/cm³, 2.22 g/cm³, 2.24 g/cm³, 2.26 g/cm³, 2.28 g/cm³, 2.3 g/cm³, etc.

In this embodiment, according to the data provided in the present disclosure, the compacted density of the positive electrode material 100 in the embodiments of the present disclosure is improved as compared with the solution in which the iron-based phosphate material only includes the first active material, so that the compacted density *ρ1* of the positive electrode material 100 satisfies: 2.0 g/cm³ *< ρ1* ≤ 2.3 g/cm³. When the compacted density *ρ1* of the positive electrode material 100 satisfies: 2.0 g/cm³ < *ρ1* ≤ 2.3 g/cm³, the compacted density *ρ1* of the positive electrode material 100 is within a reasonable range, so that the positive electrode material 100 can maintain a relatively high discharge capacity per gram and has a relatively high compacted density. When the positive electrode material 100 is applied to the positive electrode 200 and assembled into the battery 300, the battery 300 has both a relatively high energy density and good discharge performance. When the compacted density of the positive electrode material 100 is too large, that is, the mass content of the second active material is too large, and correspondingly, the mass content of the first active material is too small, so that the discharge capacity per gram of the positive electrode material 100 is relatively high, and the discharge performance of the battery 300 is reduced.

Referring to FIG. 2, in some embodiments, the positive electrode material 100 includes multiple positive electrode particles 110. Each of the multiple positive electrode particles 110 includes a coating layer 130 and a core 120. The core 120 is made of the iron-based phosphate material. The coating layer 130 is coated around a surface of the core 120. A median particle size *D50* of the positive electrode material 100 satisfies: 2 µm ≤ *D50* ≤ 5 µm.

Specifically, the median particle size *D50* of the positive electrode material 100 may be, but is not limited to, 2 µm, 2.1 µm, 2.2 µm, 2.4 µm, 2.5 µm, 2.7 µm, 2.9 µm, 3 µm, 3.1 µm, 3.3 µm, 3.5 µm, 3.6 µm, 3.8 µm, 4 µm, 4.1 µm, 4.2 µm, 4.5 µm, 4.7 µm, 4.9 µm, 5 µm, etc.

It can be understood that, the median particle size of the positive electrode material 100 is that, in the positive electrode material 100, the number of positive electrode particles with the particle size larger than the median particle size accounts for 50% of the total number of the positive electrode particles, and the number of positive electrode particles with the particle size smaller than the median particle size accounts for 50% of the total number of the positive electrode particles.

In this embodiment, the positive electrode particle includes the coating layer and the iron-based phosphate material. The coating layer is coated around the surface of the core made of the iron-based phosphate material, and used for improving conductivity of the positive electrode particle. When the median particle size *D50* of the positive electrode material 100 satisfies: 2 µm ≤ *D50* ≤ 5 µm, the median particle size *D50* of the positive electrode material 100 is within a reasonable range. Therefore, when the positive electrode material 100 is applied to the positive electrode 200, on the one hand, it is possible to avoid too small median particle size of the positive electrode material 100 and thus avoid too small compacted density of the positive electrode 200, so that the battery 300 has relatively high energy density when the positive electrode 200 is assembled into the battery 300. On the other hand, it is possible to avoid too large median particle size of the positive electrode material 100 and thus avoid the uneven surface of the positive electrode 200, so that the processing performance of the positive electrode particles applied to the positive electrode 200 is improved, the processing difficulty of the positive electrode particles applied to the positive electrode 200 is reduced, and the battery 300 has relatively good cycle performance when the positive electrode 200 applied to the battery 300. However, when the median particle size of the positive electrode material 100 is too large, in the process of applying the positive electrode material 100 to the positive electrode 200, there still are relatively large particles protruding when the positive electrode material 100 is coated onto the surface of the positive current collector 210. As a result, the processing difficulty of applying the positive electrode material 100 to the positive electrode 200 is increased, the processing performance of the positive electrode 200 is reduced, and thus when the positive electrode 200 is applied to the battery 300, the internal resistance of the battery 300 is increased and the cycle performance of the battery 300 is reduced. When the median particle size of the positive electrode material 100 is too small, after the positive electrode material 100 is applied to the positive electrode 200, the compacted density of the positive electrode 200 is too low, and thus the energy density of the battery 300 when the positive electrode 200 is assembled into the battery 300 is reduced.

In some embodiments, a particle size *D99* of the positive electrode material 100 corresponding to a particle size when a cumulative volume fraction in a volume-based distribution reaches 99% satisfies: 10 µm ≤ *D99* ≤ 30 µm.

Specifically, the particle size *D99* of the positive electrode material 100 corresponding to the cumulative particle size distribution percentage of 99% of the positive electrode material 100 may be, but is not limited to, 10 µm, 11 µm, 13 µm, 14 µm, 15 µm, 17 µm, 18 µm, 19 µm, 20 µm, 21 µm, 22 µm, 23 µm, 24 µm, 25 µm, 26 µm, 27 µm, 28 µm, 29 µm, 30 µm, etc.

It can be understood that when the median particle size *D50* of the positive electrode material 100 is larger, the particle size *D99* corresponding to the cumulative particle size distribution percentage of the positive electrode material 100 of 99% is larger.

It can be understood that the particle size corresponding to the cumulative particle size distribution percentage of the positive electrode material 100 of 99% is *D99,* and then, in the positive electrode material 100, the number of the positive electrode particles with the particle size smaller than *D99* accounts for 99% of the total number of the positive electrode particles, and the number of the positive electrode particles with the particle size larger than *D99* accounts for 1% of the total number of the positive electrode particles.

In this embodiment, when the particle size *D99* corresponding to the cumulative particle size distribution percentage of the positive electrode material 100 of 99% satisfies: 10 µm ≤ *D99* ≤ 30 µm, *D99* of the positive electrode particles is within a reasonable range. When the positive electrode material 100 is applied to the positive electrode 200, on the one hand, it is possible to avoid too small particle size of the positive electrode particle and thus avoid too small compacted density of the positive electrode 200, so that the battery 300 has a relatively high energy density when the positive electrode 200 is assembled into the battery 300. On the other hand, it is possible to avoid too large median particle size of the positive electrode particle and thus avoid the uneven surface of the positive electrode 200, so that the processing performance of the positive electrode particles applied to the positive electrode 200 is improved, the processing difficulty of the positive electrode particles applied to the positive electrode 200 is reduced, and the battery 300 has relatively good cycle performance when the positive electrode 200 is applied to the battery 300. However, when *D99* of the positive electrode particles is too large, in the process of applying the positive electrode material 100 to the positive electrode 200, there still are relatively large particles protruding when the positive electrode material 100 is coated onto the surface of the positive current collector 210. As a result, the processing difficulty of applying the positive electrode material 100 to the positive electrode 200 is increased, the processing performance of the positive electrode 200 is reduced, and thus when the positive electrode 200 is applied to the battery 300, the internal resistance of the battery 300 is increased and the cycle performance of the battery 300 is reduced. When *D99* of the positive electrode particles is too small, after the positive electrode material 100 is applied to the positive electrode 200, the compacted density of the positive electrode 200 is too low, and thus the energy density of the battery 300 when the positive electrode 200 is assembled to the battery 300 is reduced.

In some embodiments, a mass fraction *a* of the coating layer in each of the multiple positive electrode particles satisfies: 1% ≤ *a* ≤ 5%.

Specifically, the mass fraction *a* of the coating layer may be, but is not limited to, 1%, 1.1%, 1.31%, 1.5%, 1.6%, 1.7%, 2%, 2.2%, 2.4%, 2.6%, 3%, 3.2%, 3.4%, 3.6%, 3.8%, 4%, 4.2%, 4.3%, 4.5%, 4.7%, 4.9%, 5%, etc.

It can be understood that, the mass fraction of the coating layer is a ratio of the mass of the coating layer to the mass of the positive electrode particle.

In this embodiment, when the mass fraction *a* of the coating layer satisfies: 1% ≤ *a* ≤ 5%, the mass fraction of the coating layer is within a reasonable range. When the positive electrode particles are applied to the positive electrode 200 and assembled into the battery 300, on the one hand, the iron-based phosphate material includes the first active material and the second active material, so that the positive electrode material 100 has a relatively high compacted density. On the other hand, the coating layer improves the conductivity of the positive electrode particles, so that when the positive electrode particles are applied to the positive electrode 200 and assembled into the battery 300, the battery 300 has a relatively high energy density and a relatively high charge and discharge efficiency. However, when the mass fraction of the coating layer is too large, correspondingly, the mass fraction of the iron-based phosphate material in the positive electrode particle is too small, and the first active material and the second active material in the iron-based phosphate material are too small, so that the content of the active material in the positive electrode particle is reduced. As a result, when the positive electrode particles are applied to the positive electrode 200 and assembled into the battery 300, the capacity of the battery 300 is reduced, and the electrochemical performance of the battery 300 is relatively poor. When the mass fraction of the coating layer is too small, the mass content of the coating layer in the positive electrode particle is too small, so that the conductivity of the positive electrode particles is relatively poor. As a result, when the positive electrode particles are applied to the positive electrode 200 and assembled into the battery 300, the charge and discharge efficiency of the battery 300 is relatively low.

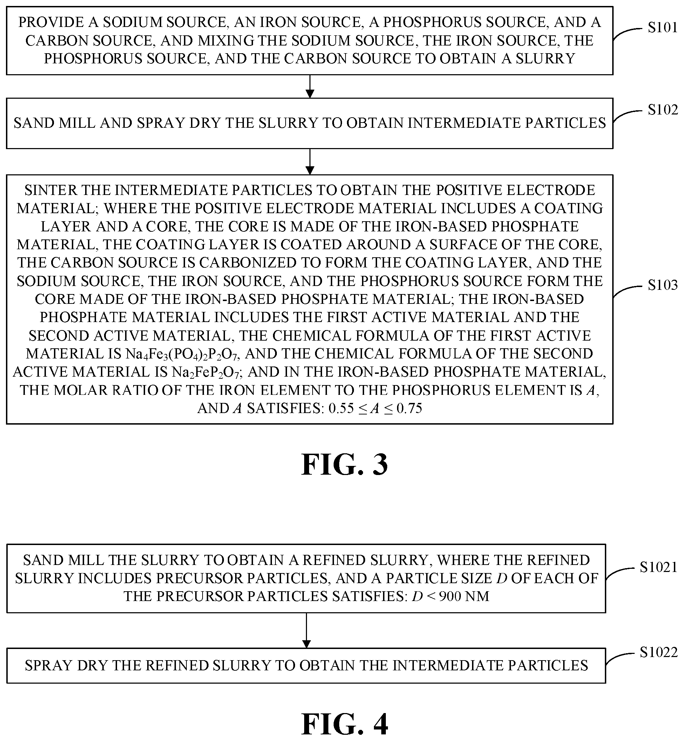

Referring to FIG. 3, the present disclosure further provides a preparation method for a positive electrode material 100. The preparation method is used to prepare the positive electrode material 100 provided in the present disclosure. The preparation method includes the following.

S101, a sodium source, an iron source, a phosphorus source, and a carbon source are provided, and a slurry is obtained by mixing the sodium source, the iron source, the phosphorus source, and the carbon source.

Optionally, the sodium source includes at least one member selected from the group consisting of sodium carbonate, sodium dihydrogen phosphate, disodium hydrogen phosphate, sodium pyrophosphate, sodium acetate, sodium hydroxide, and sodium nitrate.

Optionally, the iron source includes at least one member selected from the group consisting of ferric phosphate, ferrous oxalate, ferric nitrate, iron, ferric oxide, and ferroferric oxide.

Optionally, the phosphorus source includes at least one member selected from the group consisting of ammonium dihydrogen phosphate, diammonium hydrogen phosphate, and phosphoric acid.

Optionally, the carbon source includes at least one member selected from the group consisting of glucose, citric acid, ascorbic acid, polyethylene glycol, acetylene black, graphene, carbon nanotubes, sucrose, and starch.

S102, the slurry is sand milled and spray dried to obtain intermediate particles.

It can be understood that, by sand milling the slurry, the slurry obtained by mixing the sodium source, the iron source, the phosphorus source, and the carbon source can be further mixed, so as to improve the uniformity and stability of the mixture in the slurry and improve the overall quality and performance of the mixture in the slurry.

S103, the intermediate particles are sintered to obtain the positive electrode material 100. The positive electrode material 100 includes a coating layer and a core. The core is made of the iron-based phosphate material. The coating layer is coated around a surface of the core. The carbon source is carbonized to form the coating layer. The sodium source, the iron source, and the phosphorus source form the core made of the iron-based phosphate material. The iron-based phosphate material includes the first active material and the second active material. The chemical formula of the first active material is Na₄Fe₃(PO₄)₂P₂O₇. The chemical formula of the second active material is Na₂FeP₂O₇. In the iron-based phosphate material, the molar ratio of the iron element to the phosphorus element is *A, and A* satisfies: 0.55 ≤ *A* ≤ 0.75.

Specifically, the molar ratio A of the iron element in the iron-based phosphate material to the phosphorus element in the iron-based phosphate material may be, but is not limited to, 0.55, 0.56, 0.57, 0.58, 0.59, 0.6, 0.61, 0.63, 0.65, 0.66, 0.67, 0.68, 0.69, 0.7, 0.71, 0.72, 0.73, 0.74, 0.75, etc.

In this embodiment, the sodium source, the iron source, the phosphorus source, and the phosphorus source are mixed, sand milled, and spray dried to form the intermediate particles, and the intermediate particles are sintered, so that the sodium source, the iron source, and the phosphorus source form the first active material and the second active material, and the carbon source is carbonized to form the coating layer to improve the conductivity of the positive electrode particles. In the positive electrode particles obtained by the preparation method provided in this embodiment, the iron-based phosphate material includes the first active material and the second active material, and A satisfies: 0.55 ≤ *A* ≤ 0*.* 75 by controlling the molar ratio *A* of the iron element in the iron-based phosphate material to the phosphorus element in the iron-based phosphate material, so that both the content of the first active material in the iron-based phosphate material and the content of the second active material in the iron-based phosphate material can be within a reasonable range. On the one hand, the first active material can maintain the capacity per gram of the positive electrode material 100 in the full operating voltage range of the battery 300, so that when the positive electrode material 100 is applied to the positive electrode 200 and assembled into the battery 300, the battery 300 has good discharge performance. On the other hand, the second active material can effectively increase the compacted density of the positive electrode material 100, so that when the positive electrode material 100 is applied to the positive electrode 200 and assembled into the battery 300, the battery 300 has a relatively high compacted density. The preparation method for the positive electrode material 100 provided in the present disclosure has a simple operation process, and is convenient to reduce the preparation cost of the positive electrode material 100. In addition, the positive electrode material 100 prepared by the preparation method for the positive electrode material 100 has both a relatively high discharge capacity per gram and a relatively high compacted density, so that when the positive electrode material 100 is applied to the battery 300, the battery 300 has a good discharge performance and a relatively high energy density.

It can be understood that the molar ratio of the iron element in the iron-based phosphate material to the phosphorus element in the iron-based phosphate material is regulated by controlling the amount of substance the sodium source, the iron source, and the phosphorus source forming the slurry.

In some embodiments, sintering the intermediate particles to obtain the positive electrode material 100 includes the following. The intermediate particles are sintered at a temperature *T*, to make the carbon source carbonized to form the coating layer, and make the sodium source, the iron source, and the phosphorus source form the iron-based phosphate material. *T* satisfies: 470 °*C* ≤ *T* ≤ 580 °C.

Specifically, the temperature *T* at which the intermediate particles are sintered may be, but is not limited to, 470 °C, 475 °C, 480 °C, 485 °C, 490 °C, 495 °C, 500 °C, 505 °C, 510 °C, 520 °C, 525 °C, 530 °C, 540 °C, 545 °C, 550 °C, 560 °C, 565 °C, 570 °C, 580 °C, etc.

In this embodiment, when the temperature *T* at which the intermediate particles are sintered satisfies: 470 °C ≤ *T* ≤ 580 °C, the temperature *T* at which the intermediate particles are sintered is within a reasonable range, so that the carbon source is carbonized into the coating layer to improve the conductivity of the positive electrode material 100. In addition, the sodium source, the iron source, and the phosphorus source form the first active material, and part of the first active material is decomposed to form the second active material, so that in this temperature range, the first active material and the second active material generated from the sodium source, the iron source, and the phosphorus source are within a reasonable range. On the one hand, the first active material can maintain the capacity per gram of the positive electrode material 100 in the full operating voltage range of the battery 300, so that when the positive electrode material 100 is applied to the positive electrode 200 and assembled into the battery 300, the battery 300 has a good discharge performance. On the other hand, the second active material can effectively increase the compacted density of the positive electrode material 100, so that when the positive electrode material 100 is applied to the positive electrode 200 and assembled into the battery 300, the battery 300 has a relatively high compacted density. When the temperature *T* at which the intermediate particles are sintered is too high, most of the first active material is decomposed to form the second active material, so that the mass fraction of the first active material in the iron-based phosphate material is too small. As a result, although the second active material can make up for the deficiency in the compacted density of the first active material to increase the compacted density of the positive electrode material 100, the mass fraction of the first active material in the positive electrode material 100 is too small, so that the discharge capacity per gram of the positive electrode material 100 in the full operating voltage range of the battery 300 is reduced, and the discharge performance of the battery 300 when the positive electrode material 100 is applied to the positive electrode 200 and assembled into the battery 300 is reduced. When the temperature *T* at which the intermediate particles are sintered is too low, the temperature *T* at which the intermediate particles are sintered does not reach the formation temperature of the first active material, and it is more difficult to further decompose the first active material into the second active material, so that the sodium source, the iron source, and the phosphorus source are not sufficiently reacted during the preparation of the positive electrode material 100, the purity of the prepared positive electrode material 100 is relatively low, and the mass fraction of the first active material and the mass fraction of the second active material are too low. As a result, the compacted density of the positive material 100 is too low, and the discharge capacity per gram of the positive electrode material 100 in the full operating voltage range of the battery 300 is too low. When the positive electrode material 100 is applied to the positive electrode 200 and is assembled into the battery 300, the energy density of the battery 300 is too low, and the discharge performance of the battery 300 is relatively poor.

In some embodiments, a period during which the intermediate particles are sintered is *t*, and *t* satisfies: 10 h ≤ *t* ≤ 16 h.

Specifically, the period t during which the intermediate particles are sintered may be, but is not limited to, 10 h, 10.2 h, 10.5 h, 11 h, 11.2 h, 11.5 h, 11.8 h, 12 h, 12.2 h, 12.5 h, 12.8 h, 13 h, 13.2 h, 13.8 h, 14 h, 14.5 h, 14.8 h, 15 h, 15.5 h, 16 h, etc.

In this embodiment, when the period *t* during which the intermediate particles are sintered satisfies: 10 h ≤ *t* ≤ 16 h, the period during which the intermediate particles are sintered is within a reasonable range. On the one hand, the sodium source, the iron source, and the phosphorus source can be sufficiently reacted to form the first active material, and excessive decomposition of the first active material into the second active material can be avoided, so that the mass fraction of the first active material and the mass fraction of the second active material in the positive electrode material 100 finally produced are both within a reasonable range, and thus the positive electrode material 100 has a relatively high compacted density and a relatively high discharge capacity per gram. In addition, it is possible to avoid excessively large median particle size of the positive electrode material 100 finally produced, so as to avoid increasing the processing difficulty of the positive electrode 200. When the period during which the intermediate particles are sintered is too long, most of the first active material will be further decomposed into the second active material, so that the mass fraction of the first active material in the iron-based phosphate material is too small. As a result, although the second active material can make up for the deficiency in the compacted density of the first active material to increase the compacted density of the positive electrode material 100, the mass fraction of the first active material in the positive electrode material 100 is too small, so that the discharge capacity per gram of the positive electrode material 100 in the full operating voltage range of the battery 300 is reduced, and the discharge performance of the battery 300 when the positive electrode material 100 is applied to the positive electrode 200 and assembled into the battery 300 is reduced. Further, when the period during which the intermediate particles are sinter is longer, the median particle size of the obtained positive electrode material 100 is larger, so that the difficulty of further processing the positive electrode particles into the positive electrode 200 is increased, and thus the processing cost of the positive electrode material 100 applied to the positive electrode 200 is increased. When the period during which the intermediate particles are sintered is too short, only a small part or none of the first active material is further decomposed into the second active material, so that the mass fraction of the second active material in the iron-based phosphate material is too low, and it is difficult to increase the compacted density of the positive electrode material 100. As a result, when the positive electrode material 100 is applied to the positive electrode 200 and assembled into the battery 300, the energy density of the battery 300 is still relatively low.

In some embodiments, providing the sodium source, the iron source, the phosphorus source, and the carbon source, and mixing the sodium source, the iron source, the phosphorus source, and the carbon source to obtain the slurry, includes the following. A molar ratio *α* of a sodium element in the sodium source to an iron element in the iron source satisfies: 1.33 ≤ α ≤ 1.82.

Specifically, the molar ratio *α* of the sodium element in the sodium source to the iron element in the iron source may be, but is not limited to, 1.33, 1.35, 1.38, 1.4, 1.42, 1.45, 1.48, 1.5, 1.52, 1.56, 1.58, 1.6, 1.63, 1.65, 1.68, 1.7, 1.72, 1.76, 1.78, 1.79, 1.82, etc.

It can be understood that the amount of substance of the sodium element in the sodium source is larger than the amount of substance of the iron element in the iron source.

It can be understood that when the positive electrode material 100 is in a fully sodiated state, the bonding of the iron-oxygen bonds of the positive electrode material 100 is more stable.

In this embodiment, when the molar ratio *α* of the sodium element in the sodium source to the iron element in the iron source satisfies: 1.33 ≤ *α* ≤ 1.82, the molar ratio of the sodium element in the sodium source to the iron element in the iron source is within a reasonable range. The positive electrode particles are formed after sand milling, spray drying, and sintering the slurry, and the sodium content in the positive electrode particles is within a reasonable range, so that the bonding of iron-oxygen bonds in the positive electrode particles is stable, and the stability of the positive electrode particles is improved. When the positive electrode particles are applied to the positive electrode 200 and assembled into the battery 300, the battery 300 has relatively good charge and discharge performance and a relatively long cycle life. In addition, it is also possible to avoid excessive sodium content in the positive electrode particles and thus avoid formation of residual alkali on the surface of the positive electrode particles, so that the positive electrode 200 has relatively good processing performance when the positive electrode particles are applied to the positive electrode 200. When the molar ratio *α* of the sodium element in the sodium source to the iron element in the iron source is too large, the amount of substance of the sodium element in the sodium source is too large in the slurry, and the excess part of the sodium source combines with the anions in the slurry to form residual alkali. As a result, after sand milling, spray drying, and sintering the slurry to obtain the positive electrode particles, part of residual alkali may be present on the surface of the positive electrode particles, so that in the process of applying the positive electrode material 100 to the positive electrode 200, the processing performance of the positive electrode 200 may be affected. When the molar ratio *α* of the sodium element in the sodium source to the iron element in the iron source is too small, the positive electrode particles are formed after sand milling, spray drying, and sintering the slurry, and the sodium content in the positive electrode particles is too small, so that the bonding and formation of iron-oxygen bonds of the positive electrode particles are relatively poor, and thus the internal structure of the positive electrode particles are locally distorted. As a result, when the positive electrode material 100 is applied to the positive electrode 200 and assembled to the battery 300, the charge and discharge performance of the battery 300 may be reduced or the cycle life of the battery 300 may be shortened.

In some embodiments, a molar ratio *β* of the iron element in the iron source to a phosphorus element in the phosphorus source satisfies: 0.55 ≤ *β* ≤ 0.75.

Specifically, the molar ratio *β* of the iron element in the iron source to the phosphorus element in the phosphorus source may be, but is not limited to, 0.55, 0.56, 0.57, 0.58, 0.59, 0.6, 0.61, 0.63, 0.64, 0.65, 0.66, 0.67, 0.68, 0.69, 0.7, 0.71, 0.72, 0.73, 0.74, 0.75, etc.

It can be understood that the amount of substance of the iron element in the iron source is less than the amount of substance of the phosphorus element in the phosphorus source.

In this embodiment, when the molar ratio *β* of the iron element in the iron source to the phosphorus element in the phosphorus source satisfies: 0.55 ≤ *β* ≤ 0.75, the content of the iron element in the iron source and the content of the phosphorus element in the phosphorus source are both within a reasonable range, so that in the positive electrode particle, the content of the first active material and the content of the second active material that are formed from the iron source, the phosphorus source, and the sodium source are both within a reasonable range. The second active material cannot only increase the compacted density of the positive electrode material 100, but also avoid excessively high content of the second active material and thus avoid the discharge capacity per gram of the positive electrode material 100 from being reduced, so that the discharge capacity per gram of the positive electrode material 100 in the full operating voltage range of the battery 300 is maintained at a relatively high level. When the positive electrode material 100 is applied to the positive electrode 200 and assembled into the battery 300, the battery 300 has a relatively high energy density and a good discharge performance. In addition, generation of impurity phase NFP during preparation of the positive electrode material 100 can be avoided, so that the purity of the positive electrode material 100 can be improved, and the service life of the battery 300 can be prolonged. When the molar ratio *β* of the iron element in the iron source to the phosphorus element in the phosphorus source is too large, during the preparation of the positive electrode material 100, the impurity phase NFP will be generated, and the impurity phase NFP has no electrochemical activity, which will reduce the theoretical capacity per gram of the positive electrode material 100, so that when the positive electrode material 100 is applied to the positive electrode 200 and assembled into the battery 300, the discharge performance of the battery 300 is relatively poor. When the molar ratio *β* of the iron element in the iron source to the phosphorus element in the phosphorus source is too small, the first active material generated from the sodium source, the iron source, and the phosphorus source during the preparation of the positive electrode material 100 is too small, and then the mass fraction of the first active material in the iron-based phosphate material is too small and the mass fraction of the second active material in the iron-based phosphate material is too large. Although the second active material can make up for the deficiency of the low discharge capacity per gram of the first active material at a low voltage, the theoretical capacity per gram of the second active material is lower than the theoretical capacity per gram of the first active material, so that the discharge capacity per gram of the positive electrode material 100 in the full operating voltage range of the battery 300 is reduced, and the discharge performance of the battery 300 is relatively poor.

It can be understood that in the present disclosure, when the first active material is applied to the battery 300, the discharge capacity per gram of the first active material at a low voltage is relatively low, where the low voltage is relative to the full voltage range, and should not be understood as limiting the range of the low voltage. For example, if the maximum operating voltage of the battery 300 is 4.2 V and the minimum operating voltage of the battery 300 is and 1.5 V, the full operating voltage range of the battery 300 is from 1.5 V to 4.2 V, and the low voltage range of the battery 300 may be, but is not limited to, 1.5 V to 2.6 V, 1.5 V to 2.5 V, etc.

Referring to FIG. 4, in some embodiments, sand milling and spray drying the slurry to obtain the intermediate particles, includes the following.

S1021, sand milling the slurry to obtain a refined slurry, where the refined slurry includes precursor particles, and a particle size *D* of each of the precursor particles satisfies: *D* < 900 nm.

Specifically, the particle size *D* of the precursor particle may be, but is not limited to, 500 nm, 550 nm, 580 nm, 590 nm, 600 nm, 620 nm, 650 nm, 670 nm, 680 nm, 700 nm, 720 nm, 750 nm, 780 nm, 800 nm, 825 nm, 850 nm, 875 nm, 899 nm, etc.

S1022, the refined slurry is spray dried to obtain the intermediate particles.

In this embodiment, the slurry is sand milled to obtain the refined slurry including the precursor particles, so that the refined slurry has relatively high uniformity and stability, and the overall performance of the refined slurry is improved. Therefore, the uniformity of the iron-based phosphate material in the final obtained positive electrode particles is relatively good, so that the positive electrode particles have relatively good use performance. In this embodiment, when the particle size *D* of the precursor particle satisfies: *D* < 900 nm, in the refined slurry, adjacent precursor particles can be fully and uniformly contacted, and the sodium source, the phosphorus source, and the iron source in the slurry can be avoided from forming other impurity phases during further sintering, which is conducive to improving the purity of the final generated positive electrode material 100, and then improving the charge and discharge cycle performance of the battery 300 when the positive electrode material 100 is applied to the cathode piece 200 and assembled into the battery 300.

The technical solution of the present disclosure is further explained by multiple embodiments below.

Embodiment 1 to embodiment 8, and comparative example 1 are as follows.

### 1. Preparation and measurement of positive electrode material 100:

### (1) Preparation operations of positive electrode material 100:

Operation one: provide a sodium source, an iron source, a phosphorus source, and a carbon source, mix the sodium source, the iron source, the phosphorus source, and the carbon source to obtain a slurry. A molar ratio *α* of a sodium element in the sodium source to an iron element in the iron source satisfies: 1.33 ≤ α ≤ 1.82. A molar ratio *β* of the iron element in the iron source to a phosphorus element in the phosphorus source satisfies: 0.55 ≤ *β* ≤ 0*.* 75. *α* and *β* in each of embodiment 1 to embodiment 8 and comparative example 1 are shown in Table 1.

Operation two: sand mill the slurry to obtain a refined slurry, where the refined slurry includes precursor particles, and a particle size *D* of each of the precursor particles satisfies: *D* < 900 nm; and spray dry the refined slurry to obtain the intermediate particles.

Operation three: sintering the intermediate particles at a temperature *T* to obtain a positive electrode material 100, where the temperature at which the intermediate particles are sintered is T, and a period during which the intermediate particles are sintered is *t. T* and *t* in each of embodiment 1 to embodiment 8 and comparative example 1 are shown in Table 1.

### (2) Measurement of molar ratio A of iron element to phosphorus element in iron-based phosphate material in the positive electrode material 100:

Use an inductively coupled plasma atomic emission spectrometer (i.e., ICP method) to measure the mass fraction of the iron element in the sintered positive electrode material 100 and the mass fraction of the phosphorus element in the sintered positive electrode material 100, to obtain the molar ratio *A. A* in each of embodiment 1 to embodiment 8 and comparative example 1 are shown in Table 1.

### (3) Measurement of mass fraction B of first active material and mass fraction C of second active material in positive electrode material 100:

The mass fraction *B* of the first active material and the mass fraction C of the second active material in the positive electrode material 100 in each of embodiment 1 to embodiment 8, and the mass fraction *B* of the first active material and the mass fraction C of the second active material in the positive electrode material in comparative example 1 are obtained by X-ray diffraction (XRD) phase analysis and refinement.

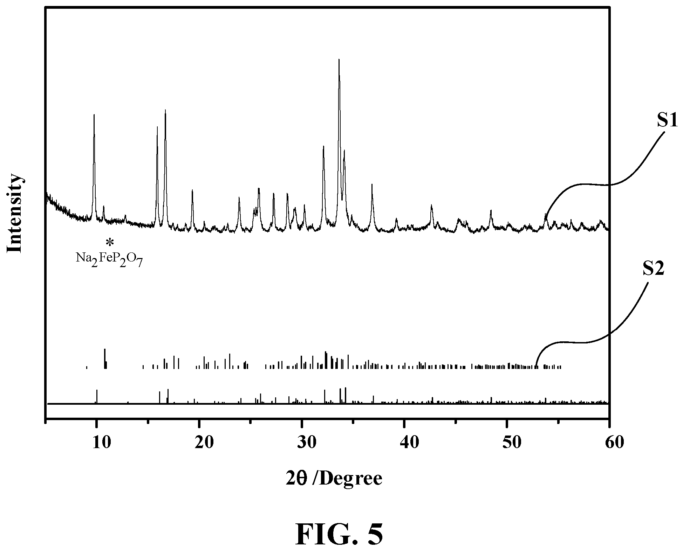

Specifically, the positive electrode material 100 in each of embodiment 1 to embodiment 8 and the positive electrode material in comparative example 1 are analyzed by XDR analysis, with a scanning range of 5 ° to 70 ° and a scanning speed of 1 °/min to 5 °/min, so as to obtain an XRD spectrum composed of the first active material and the second active material. As illustrated in FIG. *5**, S1* indicates a diffraction peak curve of the positive electrode material, where the positive electrode material includes the first active material and the second active material. A diffraction peak at (0, 1, 1) crystal plane is a characteristic diffraction peak of the second active material, as shown at a position indicated by an asterisk in FIG. 5. Other diffraction peaks are characteristic diffraction peaks of the first active material. S2 is an XRD standard powder diffraction file (PDF) card of the second active material. The intensity of the characteristic peak of the crystal plane represents the content of the phase in the positive electrode material. Combined with the obtained XRD spectra, full-map fitting refinement is performed on the XRD spectra to obtain the mass fraction *B* of the first active material and the mass fraction C of the second active material in each of embodiment 1 to embodiment 8 and comparative example 1, by using total pattern analysis solution (Topas) software, according to a model of the diffraction position and the relative intensity of the characteristic diffraction peak.

The mass fraction *B* of the first active material and the mass fraction *C* of the second active material in each of embodiment 1 to embodiment 8 and comparative example 1 are shown in Table 1.

### (4) Measurement of compacted density ρ1 of positive electrode material 100:

The compaction density *ρ1* of the positive electrode material 100 is tested by a pressure relief method. The compaction densities *ρ1* of the positive electrode materials 100 in each of embodiment 1 to embodiment 8 and comparative example 1 are shown in Table 1.

### 2. Preparation and measurement of positive electrode 200:

### (1) Preparation operations of positive electrode 200:

A positive electrode slurry is prepared according to a mass ratio of the positive electrode material 100: polyvinylidene fluoride: acetylene black = 8: 1: 1, is coated on the positive current collector 210 (e.g., aluminum foil), and then is cut to form the positive electrode 200 in each of embodiment 1 to embodiment 8, and the positive electrode in comparative example 1.

### (2) Measurement of the ultimate compacted density ρ2 of the positive electrode 200:

The positive electrode 200 whose compacted density is the ultimate compacted density is obtained by adjusting the pressure in the rolling process.

The ultimate compacted density of the positive electrode 200 is calculated as follows. Weigh a positive electrode with an area of *s* (cm²) coated with the positive electrode material 100, and denote the mass as *m₁* (g); denote the mass of an empty foil with an area s (cm²) uncoated as *m₂* (g); then use a ten-thousandth micrometer to measure the thickness of the positive electrode and the thickness of the empty foil, and record them as *l₁* and *l₂* respectively; and finally the ultimate compacted density *ρ2* (g/cm³) of the positive electrode is calculated as *p2 =* (*m₁-m₂*)/[*s*(*l₁-l₂*)]*.*

The determination method for the ultimate compacted density is as follows. Whether the compacted density of the positive electrode 200 reaches the ultimate compacted density is determined by a half-folding method. Specifically, fold the positive electrode 200 in half three times at the same position, observe whether the crease is in a slightly light-transmitting state, and if the crease is in the slightly light-transmitting state, the compacted density of the positive electrode 200 is the ultimate compacted density; if the crease is not in the light-transmitting state, the compacted density of the positive electrode 200 at this time is smaller than the ultimate compacted density; and if the electrode is directly broken, the compacted density of the positive electrode 200 at this time is larger than the ultimate compacted density. The compacted density of the electrode calculated by the above calculation method for the compacted density of the electrode is the ultimate compacted density of the electrode.

Table 1 below is a table of structural parameters and preparation parameters of the positive electrode material 100 and structural parameters of the positive electrode 200 in each of embodiment 1 to embodiment 8, and structural parameters and preparation parameters of the positive electrode material and structural parameters of the positive electrode in comparative example 1.

**Table 1: Table of structural parameters and preparation parameters of positive electrode material 100 and structural parameters of positive electrode 200 in each of embodiment 1 to embodiment 8, and structural parameters and preparation parameters of positive electrode material and structural parameters of positive electrode in comparative example 1.**

| Embodiment/ comparative example | *α* | *β* | *T* (°C) | *t* (h) | *A* | *B* (%) | *C* (%) | *ρ1* (g/cm³) | *ρ2* (g/cm³) |
|---|---|---|---|---|---|---|---|---|---|
| Comparative example 1 | 1.65 | 0.55 | 500 | 7 | 0.75 | 100 | 0 | 2 | 2.1 |
| Embodiment 1 | 1.41 | 0.58 | 490 | 10 | 0.725 | 99 | 1 | 2.063 | 2.184 |
| Embodiment 2 | 1.48 | 0.6 | 510 | 11 | 0.7 | 97 | 3 | 2.167 | 2.322 |
| Embodiment 3 | 1.55 | 0.62 | 480 | 13 | 0.675 | 95 | 5 | 2.241 | 2.421 |
| Embodiment 4 | 1.6 | 0.65 | 530 | 15 | 0.65 | 93 | 7 | 2.285 | 2.480 |
| Embodiment 5 | 1.65 | 0.68 | 500 | 12 | 0.625 | 91 | 9 | 2.300 | 2.500 |
| Embodiment 6 | 1.71 | 0.7 | 550 | 16 | 0.6 | 89 | 11 | 2.286 | 2.480 |
| Embodiment 7 | 1.75 | 0.72 | 580 | 14 | 0.575 | 87 | 13 | 2.241 | 2.421 |
| Embodiment 8 | 1.81 | 0.75 | 560 | 10 | 0.55 | 85 | 15 | 2.167 | 2.322 |

According to data in Table 1, it can be seen that the mass fraction of the first active material in the comparative battery 1 is the largest compared to the embodiment battery 1 to the embodiment battery 8, the mass fraction of the second active material in the positive electrode material in comparative example 1 is 0, the compacted density of the positive electrode material in comparative example 1 is 2 g/cm³, and the ultimate compacted density of the positive electrode 200 is 2.1 g/cm³. At this time, the compacted density of the positive electrode material 100 and the compacted density of the positive electrode 200 are relatively low. When the positive electrode 200 is applied to the positive electrode 200 and assembled into the battery 300, the energy density of the battery 300 is relatively low. According to the data of embodiment 1 to embodiment 8, it can be seen that the mass fraction *B* of the first active material in each of embodiment 1 to embodiment 8 satisfies: 85% ≤ *B* < 100%, the mass fraction *C* of the second active material satisfies: 0 < *C* ≤ 15%, and the molar ratio A of the iron element in the iron-based phosphate material to the phosphorus element in the iron-based phosphate material satisfies: 0.55 ≤ *A* ≤ 0.75. Therefore, the mass fraction of the first active material and the mass fraction of the second active material in each of embodiment 1 to embodiment 8 are both within a reasonable range, the compacted density of the positive electrode material 100 in each of embodiment 1 to embodiment 8 is larger than the compacted density of the positive electrode material in comparative example 1, and the compacted density of the positive electrode 200 in each of embodiment 1 to embodiment 8 is larger than the compacted density of the positive electrode in comparative example 1.

According to the data of the embodiment battery 1 to the embodiment battery 8, it can be seen that as the mass fraction of the second active material gradually increases, the compacted density of the positive electrode material 100 of the embodiment battery 1 to the embodiment battery 8 increases first and then decreases, and the ultimate compacted density of the positive electrode 200 of the embodiment battery 1 to the embodiment battery 8 increases first and then decreases. In addition, in embodiment 5, the compacted density of the positive electrode material 100 and the ultimate compacted density of the positive electrode 200 reach the maximum. This is because the second active material can make up for the defect of low compacted density of the first active material by doping the second active material into the first active material. In addition, when the mass fraction of the first active material and the mass fraction of the second active material are both within a reasonable range, the second active material cannot only make up for the defect of low compacted density of the first active material, but also maintain the discharge capacity per gram of the positive electrode material 100 at a relatively high level in the full operating voltage range of the battery 300, so that the positive electrode material 100 has both a relatively high compacted density and a relatively high discharge capacity per gram. According to particle size gradation theory, the compacted density can be increased by filling small particles into gaps between large particles, but if there are too many small particles filled, that is, after the gaps between large particles are completely filled, the remaining small particles will accumulate on the surface, which will weaken the effect of particle size gradation on increasing the compacted density. By analogy with the particle size gradation theory, the unit cell volume of the second active material is much smaller than the unit cell volume of the first active material, so crystal grains of the second active material are regarded as small particles, crystal grains of the first active material are regarded as large particles, the crystal grains of the second active material are filled in gaps between the crystal grains of the first active material, and thus the compacted density of the positive electrode material 100 is increased. However, after the gaps of the first active material are completely filled, the compacted density of the positive electrode material 100 reaches the maximum, while after the content of the second active material is further increased, the accumulation of small particles instead reduces the compacted density of the positive electrode material 100. As a result, the compacted density of the positive electrode material 100 in embodiment 6, the compacted density of the positive electrode material 100 in embodiment 7, and the compacted density of the positive electrode material 100 in embodiment 8 gradually decrease.

Further, it can be seen from the table that in each of embodiment 1 to embodiment 8, the molar ratio *α* of the sodium element in the sodium source to the iron element in the iron source satisfies: 1.33 ≤ α ≤ 1.82, the molar ratio *β* of the iron element in the iron source to the phosphorus element in the phosphorus source satisfies: 0.55 ≤ *β* ≤ 0*.* 75, the temperature *T* at which the intermediate particles are sintered satisfies: 470 °C ≤ *T* ≤ 580 °C, and the period *t* during which the intermediate particles are sintered satisfies: 10 h ≤ *t* ≤ 16 h. Therefore, in the iron-based phosphate material generated, the molar ratio A of the iron element to the phosphorus element in the iron-based phosphate material satisfies: 0.55 ≤ *A* ≤ 0.75, the mass fraction *B* of the intermediate particles satisfies: 85% ≤ *B* < 100%, and the mass fraction C of the second active material satisfies: 0 < *C* ≤ 15%, so that finally, the positive electrode material 100 has a relatively high compacted density, and when the positive electrode material 100 is applied to the positive electrode 200, the positive electrode 200 also has a relatively high compacted density, and finally the energy density of the battery 300 is improved when the positive electrode 200 is applied to the battery 300. However, in comparative example 1, the molar ratio *α* of the sodium element in the sodium source to the iron element in the iron source satisfies: 1.33 ≤ α ≤ 1.82, the molar ratio *β* of the iron element in the iron source to the phosphorus element in the phosphorus source satisfies: 0.55 ≤ *β* ≤ 0.75, and the temperature *T* at which the intermediate particles are sintered satisfies: 470 °C ≤ *T* ≤ 580 °C, but the period *t* during which the intermediate particles are sintered is less than 10 h. As a result, during the sintering of the intermediate particles, the period during which the intermediate particles are sintered is too short, and only a small part of or no first active material is further decomposed to generate the second active material, so that the mass fraction of the second active material in the iron-based phosphate material is too low, and thus it is difficult to increase the compacted density of the positive electrode material 100. In comparative example 1, no first active material is further decomposed to generate the second active material, and the mass fraction of the second active material in the iron-based phosphate material is 0, so that the second active material cannot make up for the defect of low theoretical density of the first active material, and thus the compacted density of the positive electrode material and the compacted density of the positive electrode in comparative example 1 are relatively low.

The term "embodiment" or "implementation" referred to herein means that a particular features, structures, or characteristics described in conjunction with embodiments may be contained in at least one embodiment of the present disclosure. Phrases appearing in various places in the specification do not necessarily refer to the same embodiment, nor does it refer to an independent or alternative embodiment that is mutually exclusive with other embodiments. It is explicitly and implicitly understood by those skilled in the art that an embodiment described herein may be combined with other embodiments. In addition, it can be further understood that the features, structures, or characteristics described in embodiments of the disclosure may be combined arbitrarily without contradiction therebetween to form another embodiment that does not depart from the spirit and scope of the technical solutions of the present disclosure.

Finally, it may be noted that the foregoing implementations are merely intended to illustrate but not limit the technical solutions of the present disclosure. Although the present disclosure is described in detail with reference to the foregoing optimal embodiments, those of ordinary skill in the art may understand that modifications or equivalent replacements can be made to the technical solutions of the present disclosure without departing from the spirit and scope of the technical solutions of the present disclosure.

## Claims

1. A positive electrode material (100), comprising an iron-based phosphate material, the iron-based phosphate material comprising a first active material and a second active material, wherein a chemical formula of the first active material is Na₄Fe₃(PO₄)₂P₂O₇, a chemical formula of the second active material is Na₂FeP₂O₇; and in the iron-based phosphate material, a molar ratio of an iron element to a phosphorus element is *A*, *and A* satisfies: 0.55 ≤ *A* ≤ 0.75.

2. The positive electrode material (100) of claim 1, wherein in the iron-based phosphate material, a mass fraction of the first active material is *B*, a mass fraction of the second active material is *C, B* satisfies: 85% ≤ *B <* 100%, and *C* satisfies: 0 < *C* ≤ 15%.

3. The positive electrode material (100) of claim 2, wherein a compacted density of the positive electrode material (100) is *ρ1,* and *ρ1* satisfies: *ρ1* = -37.04*B*² - 67.41*C* + 39.04.

4. The positive electrode material (100) of claim 3, wherein the compacted density *ρ1* of the positive electrode material (100) satisfies: 2.0 g/cm³ *< ρ1* ≤ 2.3 g/cm³.

5. The positive electrode material (100) of claim 1, wherein the positive electrode material (100) comprises a plurality of positive electrode particles (110), each of the plurality of positive electrode particles (110) comprises a coating layer (130) and a core (120), the core (120) is made of the iron-based phosphate material, the coating layer (130) is coated around a surface of the core (120), and a median particle size *D50* of the positive electrode material (100) satisfies: 2 µm ≤*D50* ≤ 5 µm; and a particle size *D99* of the positive electrode material (100) corresponding to a particle size when a cumulative volume fraction in a volume-based distribution reaches 99% satisfies: 10 µm ≤ *D99* ≤ 30 µm.

6. The positive electrode material (100) of claim 5, wherein a mass fraction *a* of the coating layer (130) in each of the plurality of positive electrode particles (110) satisfies: 1% ≤ *a* ≤ 5%.

7. A preparation method for the positive electrode material of any one of claims 1 to 6, comprising:
Providing (S101) a sodium source, an iron source, a phosphorus source, and a carbon source, and mixing the sodium source, the iron source, the phosphorus source, and the carbon source to obtain a slurry;
sand milling (S102) and spray drying the slurry to obtain intermediate particles; and
sintering (S103) the intermediate particles to obtain the positive electrode material; wherein the positive electrode material comprises a coating layer and a core, the core is made of the iron-based phosphate material, the coating layer is coated around a surface of the core, the carbon source is carbonized to form the coating layer, and the sodium source, the iron source, and the phosphorus source form the core made of the iron-based phosphate material; the iron-based phosphate material comprises the first active material and the second active material, the chemical formula of the first active material is Na₄Fe₃(PO₄)₂P₂O₇, and the chemical formula of the second active material is Na₂FeP₂O₇; and in the iron-based phosphate material, the molar ratio of the iron element to the phosphorus element is *A*, and *A* satisfies: 0.55 ≤ *A* ≤ 0.75.

8. The preparation method for the positive electrode material of claim 7, wherein sintering the intermediate particles to obtain the positive electrode material comprises:
sintering the intermediate particles at a temperature *T*, to make the carbon source carbonized to form the coating layer, and make the sodium source, the iron source, and the phosphorus source form the iron-based phosphate material, wherein *T* satisfies: 470 °C ≤ *T* ≤ 580 °C.

9. The preparation method for the positive electrode material of claim 8, wherein a period during which the intermediate particles are sintered is *t,* and *t* satisfies: 10 h ≤ *t* ≤ 16 h.

10. The preparation method for the positive electrode material of claim 7, wherein a molar ratio *α* of a sodium element in the sodium source to an iron element in the iron source satisfies: 1.33 ≤ α ≤ 1.82; and a molar ratio *β* of the iron element in the iron source to a phosphorus element in the phosphorus source satisfies: 0.55 ≤ *β* ≤ 0.75.

11. The preparation method for the positive electrode material of claim 7, wherein sand milling and spray drying the slurry to obtain the intermediate particles, comprises:
sand milling (S1021) the slurry to obtain a refined slurry, wherein the refined slurry comprises precursor particles, and a particle size *D* of each of the precursor particles satisfies: *D <* 900 nm; and
spray drying (S1022) the refined slurry to obtain the intermediate particles.

12. A positive electrode (200), comprising:
a positive current collector (210); and
a positive electrode material layer (220), wherein the positive electrode material layer (220) is disposed on a surface of the positive current collector (210); and the positive electrode material layer (220) comprises the positive electrode material (100) of any one of claims 1 to 6, or the positive electrode material (100) obtained by the preparation method for the positive electrode material of any one of claims 7 to 11;
wherein an ultimate compacted density *ρ2* of the positive electrode (200) satisfies: 2.1 g/cm³ *<ρ2* ≤ 2.5 g/cm³.

13. The positive electrode (200) of claim 12, wherein in the iron-based phosphate material, a mass fraction of the first active material is *B,* a mass fraction of the second active material is C, *C* = 1 - *B*, and the ultimate compacted density *ρ2* of the positive electrode (200) satisfies: *ρ2* = -49.38*B*² - 89.87C + 51.48.

14. A battery (300), comprising:
an electrolyte (310);
a negative electrode (320), at least partially immersed in the electrolyte (310);
a separator (330), positioned at one side of the negative electrode (320) and at least partially immersed in the electrolyte (310); and
the positive electrode (200) of claim 12 or claim 13, disposed at one side of the separator (330) positioned facing away from the negative electrode (320) and at least partially immersed in the electrolyte (310).
